# FASCICULE DE BREVET EUROPEEN

(11) **EP 3 775 646 B1**
(45) Date de publication et mention de la délivrance du brevet: **25.01.2023**
(21) Numéro de dépôt: 19720944.8
(22) Date de dépôt: 27.03.2019
(51) Int. Cl.: F16K 31/60, F16K 35/10, G05G 1/12, G05G 5/28

(54) **DISPOSITIF POUR INTERDIRE LA MANOEUVRE D'UN ROBINET**
VORRICHTUNG ZUR VERHINDERUNG DER MANIPULATION EINES ABSPERRHAHNS
DEVICE FOR PREVENTING THE MANIPULATION OF A STOPCOCK

(30) Priorité: 29.03.2018 FR 1852733
(43) Date de publication de la demande: 17.02.2021
(73) Titulaire: GRDF, 75009 Paris (FR)
(72) Inventeur: CARRE, Romuald, 83200 Toulon (FR); FRONTERO, Philippe, 06220 Vallauris (FR)
(74) Mandataire: IP Trust
(86) Numéro de dépôt international: PCT/FR2019/050700
(87) Numéro de publication internationale: WO 2019/186063

(56) Documents cités:
- DE-A1- 1 956 249
- DE-U1- 9 100 266
- GB-A- 2 227 811
- US-A- 2 780 333
- US-A- 4 526 193
- US-A1- 2012 266 410
- US-A1- 2017 268 684

## Description

### Domaine technique

L'invention se rapporte à un dispositif pour interdire la manoeuvre d'un robinet ou d'une vanne. On s'intéresse particulièrement aux robinets ou vannes destinés à autoriser ou non le passage d'un fluide dans une canalisation. Le fluide en question peut être de tout type, liquide ou gazeux. En particulier, le fluide en question peut être un gaz, notamment un gaz comprenant des hydrocarbures, ledit gaz étant alors inflammable et étant destiné à servir de combustible.

### Contexte et Art Antérieur

Un gaz comprenant des composés hydrocarbures est d'une part une denrée délivrée en contrepartie d'une facturation et d'autre part une denrée qui peut présenter un danger de combustion non désirée, parfois explosive, comme connu en soi. Par conséquent, il est d'usage de prévoir des robinets d'arrêt sur les conduites qui permettent l'acheminement du gaz à partir d'une réserve jusqu'à un ou plusieurs points de consommation. On utilise indifféremment le terme de « robinet » d'arrêt ou de « vanne » d'arrêt. Un tel robinet comprend d'une part un corps relié à un espace amont et un espace aval et d'autre part un élément mobile (généralement en rotation) qui permet de placer un tel robinet soit dans une position fermée où la circulation du fluide est bloquée soit dans une position ouverte où la circulation du fluide est possible. L'élément mobile est relié à un organe de manoeuvre appelé dans la suite « tête de robinet », accessible par les doigts et/ou la main d'un opérateur, voire à manoeuvrer par le biais d'un outil.

En vue d'assurer la sécurité des biens et des personnes, il est avantageux d'empêcher une manoeuvre non désirée de l'élément mobile du robinet. Notamment il est avantageux de pouvoir bloquer le robinet en position fermée, en vue de sécuriser la partie de l'installation desservie qui se situe en aval du robinet d'arrêt. Le blocage du robinet en position ouverte peut être aussi parfois nécessaire. Dans certains cas, il peut être souhaité que la sécurisation du robinet en position fermée soit définitive ou quasi définitive de manière à condamner l'utilisation de l'installation située en aval du robinet d'arrêt.

Un type particulier de robinet est appelé « quart de tour », dans lequel l'élément mobile est formé comme un boisseau qu'il faut faire pivoter de 90° pour passer de la position fermée à une position ouverte totale. Des positions intermédiaires correspondant à des ouvertures partielles sont néanmoins possibles.

Le document US3980099 enseigne un capot de sécurisation d'un robinet d'arrêt quart de tour. Toutefois, on remarque que les formes du capot doivent correspondre à la géométrie particulière de la tête de robinet à sécuriser; ainsi pour sécuriser une tête de robinet de forme différente, il faut faire appel à un capot de sécurisation de forme différente. Par ailleurs, l'installation d'un tel capot nécessite un accès autour de la conduite sur laquelle le robinet est installé. US4526193 décrit de plus un dispositif de sécurité selon le préambule de la revendication 1.

Il subsiste donc un besoin de proposer un dispositif de sécurisation pour empêcher une manoeuvre non désirée de la tête du robinet et qui puisse être installé sur plusieurs types de robinet ayant des formes de têtes différentes les unes des autres.

### Résumé de l'invention

A cet effet, il est proposé un dispositif de sécurité (10) pour empêcher la manoeuvre d'un robinet d'arrêt (4) sur une canalisation (9) d'axe X, le robinet ayant un corps (5) et une tête (6), la tête pouvant être pivotée par rapport au corps selon un axe de manoeuvre (A), le dispositif comprenant :
- une coque extérieure (1),
- un élément de base (2), reçu dans la coque extérieure, et destiné à être relié à la tête du robinet,
   le dispositif de sécurité comprenant des moyens de rétention adaptés pour fixer le dispositif sur le corps du robinet et/ou sur la tête du robinet,
   la coque extérieure (1) étant reliée à l'élément de base (2) par une liaison à rotation libre autour de l'axe de manoeuvre, la coque extérieure empêchant ainsi un accès et une manoeuvre de la tête du robinet,
- le dispositif comprenant en outre un module adaptateur (3) reçu dans l'élément de base (2), avec au moins un logement (31-36) pour emprisonner la tête (6) du robinet.

Selon l'invention, le module adaptateur (3) présente au moins deux faces opposées, chacune comportant un logement destiné à recevoir respectivement un type de tête de robinet. Plus particulièrement, et toujours selon l'invention, le module adaptateur est substantiellement de forme cubique et présente 3 à 6 faces utilisables, chacune comportant un logement destiné à recevoir respectivement un type de tête de robinet. Ainsi, le dispositif de sécurité peut être installé sur au moins trois types de robinets différents. La forme générale cubique permet de choisir une orientation appropriée pour insérer le module adaptateur dans la cavité de l'élément de base, avec l'une ou l'autre des trois à six faces en vis-à-vis de la tête du robinet à sécuriser.

Grâce à ces dispositions, et notamment grâce au module adaptateur, il est possible d'installer un tel dispositif sur plusieurs types de robinet ayant des formes de têtes différentes les unes des autres. Un tel dispositif est donc un dispositif de sécurisation standardisé apte à être utilisé sur plusieurs types de robinets, ce qui simplifie la gestion des pièces amenées dans les véhicules d'intervention par les compagnons et qui facilite ainsi la tâche des compagnons.

Avantageusement, les moyens de rétention (collage, clipsage, verrouillage ou autre) prévus pour le dispositif permettent d'empêcher le retrait du dispositif, notamment lors d'une tentative de retrait par tirage axial le long de l'axe de manoeuvre.

En outre, le dispositif proposé présent une bonne compacité et ne nécessite pas forcément d'avoir accès à la partie inférieure de la canalisation.

Dans divers modes de réalisation de l'invention, on peut éventuellement avoir recours en outre à l'une et/ou à l'autre des dispositions suivantes, prises isolément ou en combinaison.

Selon un aspect, l'élément de base comprend une cavité configurée pour recevoir le module adaptateur, la cavité étant de préférence de forme parallélépipédique propre à recevoir l'insertion d'un module adaptateur de forme parallélépipédique complémentaire, et ainsi le module adaptateur peut être ainsi inséré dans la cavité de l'élément de base.

Selon un aspect optionnel, ledit logement est formé comme une empreinte complémentaire de la forme de la tête de robinet à immobiliser. Ainsi le compagnon (l'intervenant) peut facilement identifier la bonne face du module adaptateur à mettre en vis-à-vis de la tête du robinet à sécuriser. On forme ainsi un détrompage visuel.

Selon un aspect optionnel, la coque extérieure enveloppe substantiellement l'élément de base. Ainsi, cet effet enveloppant empêche efficacement un accès à l'élément de base et on interdit par le fait une rotation de l'élément de base et donc de la tête du robinet.

Selon un aspect optionnel, la coque extérieure peut être formée avec une base discoïde et une jupe cylindrique. Moyennant quoi la coque extérieure est une forme simple à fabriquer ; elle peut être obtenue par un procédé de moulage conventionnel ; sa forme cylindrique peut en outre dissuader une tentative de violation de la sécurisation du robinet.

Selon un aspect optionnel, l'axe de manoeuvre A est perpendiculaire à l'axe principal X de la canalisation. Il s'agit en effet d'une configuration très souvent rencontrée dans la pratique.

Selon un aspect optionnel, le robinet est une vanne `quart de tour'. Il s'agit en effet d'une configuration très souvent rencontrée dans la pratique. On définit alors un ensemble comprenant un robinet et un dispositif de sécurité tel que décrit ci-dessus.

Selon un aspect optionnel, le dispositif de sécurité est fixé par collage sur le robinet. Cette solution est avantageuse lorsque l'accès à la canalisation n'est pas aisée voire impossible. Cette solution s'avère pratique dans le cas où le robinet est installé dans un regard, au sol ou en profondeur.

Selon un aspect optionnel, il peut être prévu que le module adaptateur soit fixé sur la tête du robinet (6) par collage.

Selon un aspect optionnel, il peut être prévu en outre que l'élément de base soit fixé au module adaptateur par collage. On peut avantageusement utiliser ces solutions notamment lorsque le la condamnation du robinet est définitive.

Selon un aspect optionnel, le dispositif de sécurité peut être fixé par clipsage sur le robinet. Ce clipsage peut être réversible ou non réversible. Cette solution est une alternative mécanique aux solutions de collage.

Selon une solution alternative, le dispositif de sécurité peut être fixé par clipsage sur la canalisation de part et d'autre du robinet. Cette solution est une alternative mécanique aux solutions de collage.

Selon un aspect optionnel, il peut être prévu une rainure annulaire dans l'une des pièces parmi la coque extérieure ou l'élément de base et une nervure annulaire dans l'autre des pièces parmi la coque extérieure ou l'élément de base, la nervure étant reçue dans la rainure annulaire, de sorte à maintenir la coque extérieure sur l'élément de base et empêcher son retrait de long de l'axe A. Autrement dit, selon une première solution, on peut prévoir la rainure annulaire dans la coque extérieure et une nervure ou des pattes de verrouillage dans l'élément de base ; à l'inverse selon une deuxième solution, la rainure annulaire est ménagée dans l'élément de base et une nervure ou des pattes de verrouillage dans la coque extérieure. Ceci forme avantageusement une liaison libre en rotation autour de l'axe mais qui empêche le retrait de la coque extérieure par rapport à l'élément de base.

Selon un aspect optionnel, la coque extérieure peut être fixée sur l'élément de base par clipsage. Ce clipsage peut être réversible moyennant l'utilisation d'une clé ou d'un outil spécial. Cette solution permet d'autoriser seulement le personnel autorisé à manoeuvrer le robinet.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 représente schématiquement en vue de côté une canalisation avec un robinet et un dispositif de sécurité, avant assemblage, comme prévu par la présente invention,
- la figure 2 est analogue à la figure 1 et représente le dispositif de sécurité assemblé sur le robinet,
- la figure 3 représente schématiquement en vue de dessus le dispositif de sécurité assemblé sur le robinet,
- la figure 4 représente une vue en perspective éclatée des différents éléments du dispositif de sécurité et un exemple de tête de robinet,
- la figure 4B illustre le dispositif assemblé et la position de la colle dans le mode de réalisation avec collage,
- les figures 5A représente schématiquement une vue partielle en coupe d'une première solution pour la rétention des pièces du dispositif de sécurité entre elles,
- la figure 5B représente schématiquement une vue partielle en coupe d'une deuxième solution pour la rétention des pièces du dispositif de sécurité entre elles,
- la figure 5C représente schématiquement une vue partielle en coupe d'une troisième solution pour la rétention des pièces du dispositif de sécurité entre elles,
- les figures 5D et 5E représentent schématiquement des variantes de solutions pour la rétention de l'élément de base et de la coque extérieure,
- la figure 6 illustre un exemple de module adaptateur avec deux faces utiles, cet exemple ne faisant pas partie de l'objet tel que revendiqué,
- la figure 7 illustre les différentes faces d'un exemple de module adaptateur chacune portant une empreinte adaptée à une tête de robinet particulière,
- la figure 8 est analogue à la figure 5C et illustre une variante dans laquelle la coque extérieure peut être déclipsée au moyen d'un outil spécial,
- la figure 9 illustre en vue de dessus la configuration de la variante de la figure 8.

### Description détaillée

Sur les différentes figures, les mêmes références désignent des éléments identiques ou similaires. Pour des raisons de clarté de l'exposé, certaines éléments ne sont pas nécessairement représentés à l'échelle.

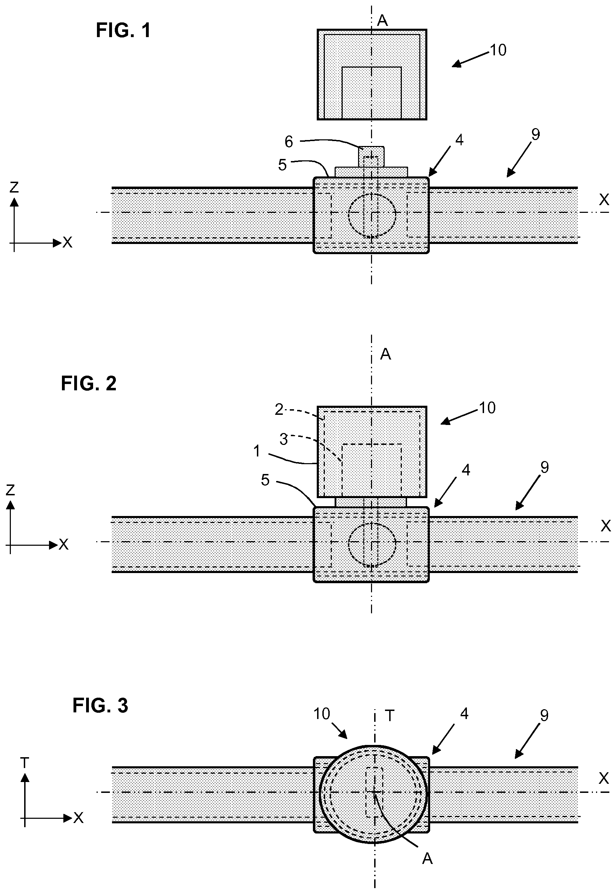

La figure 1 représente une canalisation repérée **9.** Dans l'exemple illustré, il s'agit d'une canalisation tubulaire de section ronde mais l'invention peut être appliquée à tout autre type de tubulure de section différente voire de section non constante, etc.

La matière de la canalisation peut être métallique. La matière de la canalisation peut être non métallique par exemple matière plastique, ABS, PVC.

La canalisation **9** est configurée pour transporter un fluide, liquide ou gazeux à partir d'une zone amont comprenant une réserve jusqu'à un ou plusieurs points de consommation. Dans un exemple particulièrement visé, le fluide peut être un gaz, notamment un gaz comprenant des hydrocarbures, ledit gaz étant alors inflammable et étant destiné à servir de combustible. Il peut s'agir d'une installation de distribution de gaz dit « gaz de ville » ou d'une installation de distribution de gaz dans un site industriel.

Il faut noter que la canalisation **9** peut transporter de l'eau ou un fluide liquide de toute nature.

Sur cette canalisation **9,** est interposée un robinet d'arrêt repéré **4.**

Dans l'exemple illustré, la canalisation est présentée dans un mode en ligne, mais il faut noter que le robinet pourrait être disposé à l'endroit d'un T de distribution.

Il convient toutefois de noter que le robinet pourrait être disposé entre deux flasques de fixation soit à une canalisation soit à un autre dispositif tel qu'un filtre, une réserve, etc...

Dans un certain nombre de cas pratiques, la canalisation est une canalisation enterrée et le robinet est installé dans un regard. Le regard est une cavité agencée dans le sol (plus ou moins profond) avec une ouverture vers l'extérieur en partie supérieure qui peut être couverte par une plaque de fermeture.

Le robinet comprend un corps **5** et une tête **6,** la tête pouvant être pivotée par rapport au corps selon un axe de manoeuvre **A.**

Le corps **5** est relié fluidiquement à un espace amont et un espace aval.

À l'intérieur du corps du robinet, il est prévu élément mobile (généralement en rotation ou en translation) qui permet de placer le robinet soit dans une position fermée où la circulation du fluide est bloquée, soit dans une position ouverte où la circulation du fluide est possible (avec un débit relié au différentiel de pression). L'élément mobile est relié à un organe de manoeuvre appelé ici « tête de robinet ».

La tête est accessible par les doigts et/ou la main d'un opérateur, voire à manoeuvrer par le biais d'un outil.

La tête proprement dite peut être complétée par une poignée de tête qui permet un manoeuvre aisée à la main (dans ce cas la poignée de tête est montée sur la tête proprement dite).

Le robinet peut être une vanne `quart de tour' . Pour telle configuration d'une vanne quart de tour, l'élément mobile est appelé un boisseau. Dans d'autres configurations, la rotation de la tête peut être supérieure à 90°.

Dans une configuration dite `à vis', la rotation de la tête entre la position ouverte et la position fermée peut être transformée en translation de l'organe de fermeture.

Selon la présente invention, il est prévu un dispositif de sécurité **10** pour empêcher (i.e. interdire) la manoeuvre du robinet d'arrêt **4** sur la canalisation **9.**

Dans l'exemple illustré, la canalisation s'étend le long d'un axe longitudinal **X.** Le repère spatial est complété par l'axe **Z** qui correspond à une parallèle l'axe de manoeuvre **A,** et l'axe transversal noté **T,** perpendiculaire aux deux axes susmentionnés.

Dans l'exemple illustré, l'axe de manoeuvre **A** est perpendiculaire à l'axe longitudinal **X,** mais il n'est pas exclu que l'angle entre l'axe de manoeuvre **A** et l'axe longitudinal X soit différent de 90°.

### Composition du dispositif de sécurité

Le dispositif de sécurité **10** comprend essentiellement une coque extérieure **1,** un élément de base **2,** et un module adaptateur **3** comme illustré à la figure 3.

L'élément de base **2** est reçu dans la coque extérieure **1.**

Le module adaptateur **3** est reçu dans l'élément de base **2.**

Le dispositif de sécurité **10** est destiné à être fixé soit sur le corps 5 soit sur la tête 6 du robinet elle-même, de sorte que le dispositif de sécurité **10** ne puisse pas être ôté sauf à le casser.

Le module adaptateur **3** comprend des logements dont au moins un est destiné à emprisonner la tête **6** du robinet à sécuriser (respectivement emprisonner la poignée de tête du robinet à sécuriser).

Dans l'exemple illustré, le module adaptateur **3** comprend six logements **(31-36),** i.e. un logement sur chacun de ses faces.

De façon générique, le module adaptateur **3** comprend donc au moins un logement pour emprisonner la tête **6** du robinet (respectivement emprisonner la poignée de tête du robinet à sécuriser).

Avantageusement, la coque extérieure **1** est reliée à l'élément de base **2** par une liaison à rotation libre autour de l'axe de manoeuvre **A,** la coque extérieure empêchant ainsi une manoeuvre effective de la tête du robinet, car la coque extérieure tourne « dans le vide » sans entrainer en rotation l'élément de base **2** et par conséquent sans entrainer en rotation la tête **6** du robinet.

Dans l'exemple illustré, la coque extérieure **1** est formée comme un capuchon à géométrie simple, avec une base discoïde **18** et une jupe cylindrique **11** qui s'étend jusqu'à un bord libre **19.**

Avantageusement, la coque extérieure **1** enveloppe substantiellement l'élément de base **2.** Ainsi, cet effet enveloppant empêche efficacement un accès à l'élément de base et interdit ainsi une rotation de l'élément de base 2 et donc de la tête 6 du robinet.

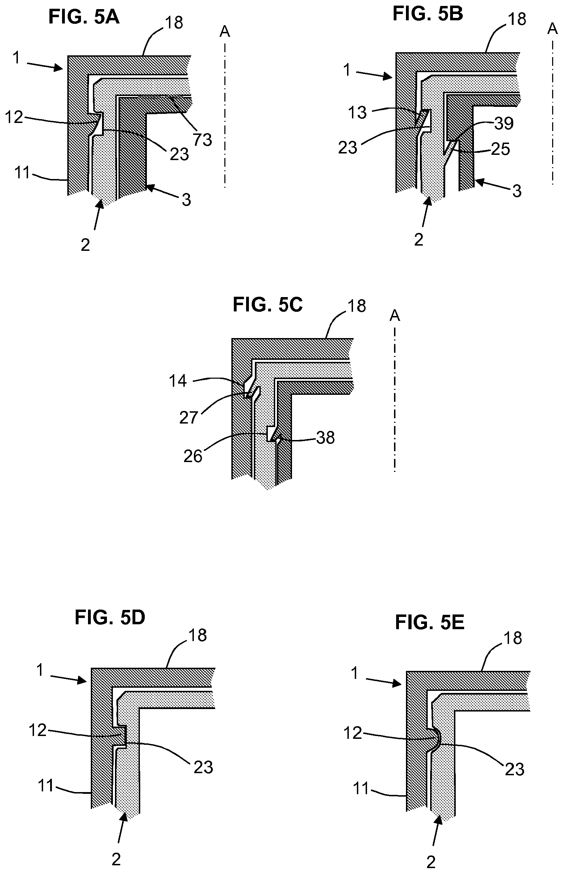

La coque extérieure **1** comprend une nervure **12** de forme annulaire qui s'étend radialement vers l'intérieur à partir de la jupe **11.** Cette nervure **12** peut présenter une section carrée ou peut être formée comme un bourrelet comme représenté à la figure 5A.

Dans l'exemple illustré, l'élément de base **2** comprend un corps de forme extérieure générale cylindrique d'axe **A,** avec un fond **20,** un manchon **21** et une cavité intérieure **22** configurée pour recevoir le module adaptateur **3.** La cavité **22** présente de préférence une forme substantiellement parallélépipédique propre à recevoir l'insertion d'un module adaptateur **3.** Le manchon **21** présent ici une forme extérieure cylindrique, toutefois d'autres formes sont aussi possibles. De même, le fond **20** pourrait être de forme différente voire ajouré.

Il est prévu sur la paroi externe de l'élément de base une rainure annulaire **23** qui se trouve lorsque le dispositif est assemblé en vis-à-vis de la nervure 12 susmentionnée. Comme illustré à la figure 5A, une fois les deux pièces assemblées, il n'est pas possible de dissocier l'élément de base 2 de la coque extérieure 1 ; seule une rotation autour de l'axe A est possible : ceci forme la liaison à rotation libre propice à la fonction tourne à vide recherchée.

En variante, la forme de la cavité **22** pourrait être différente pour autant qu'elle reçoive le module adaptateur **3** tout en empêchant sa rotation autour de l'axe **A.**

Dans l'exemple illustré, le module adaptateur **3** est substantiellement de forme cubique et présente 6 faces utilisables, chacune pouvant comporter un logement destiné à recevoir respectivement un type de tête de robinet.

Dans d'autres réalisations possibles, le module adaptateur **3** peut comprendre 3 faces utilisables, chaque face utilisable comportant un logement et chaque face opposée étant lisse (ou en alternative présentant une forme de clipsage dans le fond de la cavité **22)** (cas non représenté aux figures).

Bien entendu, module adaptateur **3** peut comprendre 3 à 6 faces utilisables.

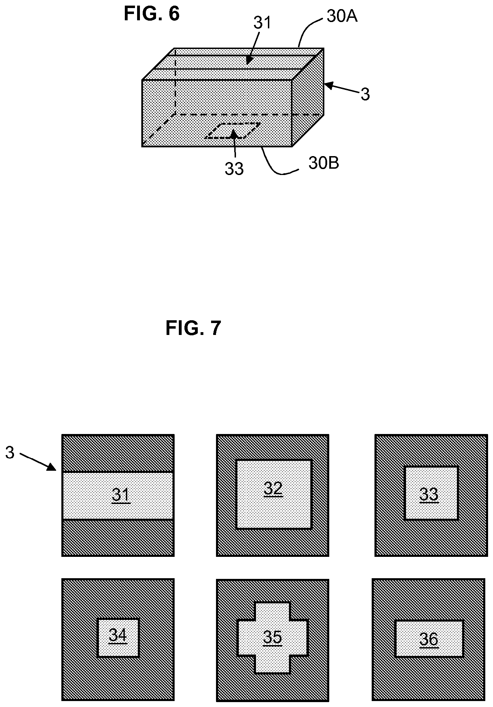

Dans une variante illustrée en figure 6, et ne faisant pas partie de l'objet tel que revendiqué, le module adaptateur **3** comprend 2 faces utilisables, opposées l'une à l'autre, le module adaptateur **3** n'étant alors pas cubique mais présentant une forme parallélépipédique plus plate d'un cube. Chacune des deux faces opposées repérées **30A** et **30B** comporte un logement respectif **31,33** destiné à recevoir respectivement un type de tête de robinet.

Chaque logement est avantageusement formé comme une empreinte complémentaire de la forme de la tête de robinet à immobiliser. Ainsi le compagnon (i.e. l'intervenant) peut facilement identifier la bonne face du module adaptateur à mettre en vis-à-vis de la tête du robinet à sécuriser. On forme ainsi un détrompage visuel efficace et avantageux.

Ainsi le module adaptateur 3 peut être ainsi inséré du bon côté sans risque de se tromper dans la cavité de l'élément de base 2.

Comme illustré à la figure 7, la première face du module adaptateur peut comprendre un premier logement **31** (c'est-à-dire une empreinte) de forme rectangle, le deuxième logement **32** est formé comme carré de grande taille (ex : côté d'environ 30 à 35 mm), le troisième logement **33** est formé comme un carré de taille moyenne (ex : côté d'environ 20 à 25 mm), le quatrième logement **34** est formé comme un carré de petite taille (ex : côté d'environ 12 à 18 mm), le cinquième logement **35** est formé comme une croix, et le sixième logement **36** est formé comme un rectangle de petite taille. Des formes hexagonales sont aussi possibles, des formes triangulaires sont également possibles, d'autres types de forme correspondant aux têtes de robinet existant sont également possibles.

La profondeur de chaque logement correspond à la hauteur de la tête de robinet destiné à être emprisonné dans le logement respectif.

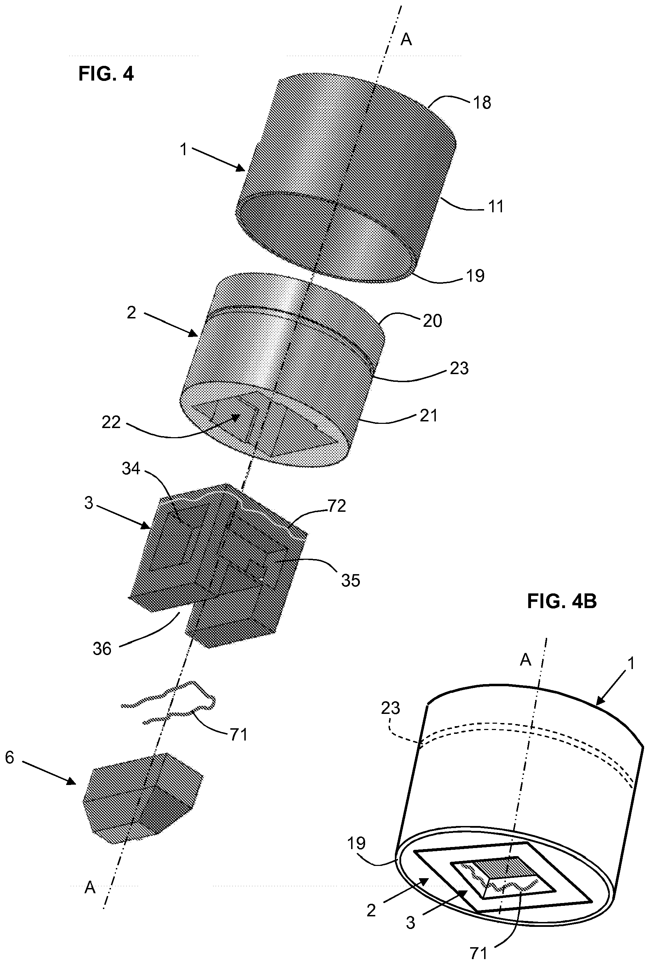

La zone centrale du module adaptateur peut former un noyau creux comme illustré à la figure 4. En variante, il peut s'agir d'un noyau plein.

La cavité **22** et le module adaptateur **3** ont des formes complémentaires, de manière ce que le module adaptateur **3** puisse être inséré soit sans jeu substantiel soit avec un jeu minime permettant l'interposition d'une colle **72** comme il sera vu plus loin.

La matière de la coque extérieure peut être une matière plastique de type ABS, PVC, PTFE, ou autre. La matière de l'élément de base peut être une matière plastique de type ABS, PVC, PTFE, ou autre. La matière du module adaptateur peut être une matière plastique de type ABS, PVC, PTFE, ou autre.

### Installation du dispositif de sécurité

Le dispositif de sécurité 10 comprend des moyens de rétention adaptés pour fixer le dispositif sur la tête 6 du robinet. En complément et/ou en alternative, il est prévu des moyens de rétention pour fixer le dispositif sur le corps 5 du robinet, voire éventuellement par rapport à la canalisation adjacente au robinet.

Selon une première solution, on peut utiliser une solution de collage pour fixer le module adaptateur **3** sur la sur la tête du robinet. De la colle est interposée entre la tête du robinet et le logement du module adaptateur **3** qui entoure la tête du robinet. Par ailleurs, on peut aussi avoir de la colle interposée entre le module adaptateur **3** et la cavité **22** de l'élément de base **2.**

Plus précisément, un cordon de colle **71** est appliqué dans le logement destiné à être disposé autour de la tête du robinet. Après pose, prise et séchage, une liaison rigide relie la tête du robinet et le module adaptateur 3.

Un deuxième cordon de colle **72** est appliqué, soit en fond de cavité (repère **73** figure 5A), soit sur la face opposé du module (c'est-à-dire la face opposée à celle entourant la tête de robinet). Il est bien entendu que d'autres solutions de collage peut être envisagées.

Pour ce qui concerne la liaison à rotation libre entre la coque extérieure **1** et l'élément de base **2,** nous avons déjà décrit plus haut une solution avec une rainure annulaire **23** dans laquelle vient se loger une nervure en forme de bourrelet **12.** L'élasticité des matériaux utilisés permet l'insertion de la nervure 12 dans la rainure 23. La forme de la nervure peut être étudiée pour former un ancrage ou un effet harpon dans la rainure.

Le montage inversé (non illustré) est également possible à savoir une rainure annulaire prévue sur la paroi intérieure de la coque extérieure 1 et un bourrelet saillant en vis-à-vis prévu sur la paroi extérieure de l'élément de base 2.

Comme illustré à la figure 5B, en lieu et place de de la nervure saillante, il peut être prévu des pattes de clipsage **13** qui viennent se loger dans la rainure annulaire **23.**

Comme illustré à la figure 5C, une variante prévoit une rainure annulaire intérieure **14** ménagée dans la coque extérieure **1.** En vis-à-vis il est prévu des pattes de clipsage **27** qui viennent s'ancrer dans la rainure **14.**

Comme illustré à la figure 5D, il peut être prévu une nervure à section carrée **12** qui vient se loger dans la rainure annulaire **23,** en forme de gorge à section carré complémentaire avec jeu minime.

Comme illustré à la figure 5E, il peut être prévu une nervure à section semi-circulaire (bosse ronde) **12** qui vient se loger dans la rainure annulaire **23,** en forme de section semi-circulaire complémentaire.

On peut remarquer que la partie femelle c'est-à-dire la rainure en creux s'étend sur tout le tour alors que la partie mâle à savoir la nervure 12 ou les pattes de clipsage 13,27 peuvent être de nature discontinue, c'est-à-dire il peut en être prévu un nombre entre 3 et 6 sur le pourtour.

En ce qui concerne la rétention du module adaptateur à l'intérieur de l'élément de base, il peut être prévu un collage déjà évoqué, mais illustré par un cordon de colle **73** à la figure 5A.

Sur la figure 5B, est représentée une solution avec un épaulement **39** prévu à l'extérieur du module adaptateur et orientée vers la tête du robinet ; sur cet épaulement viennent s'ancrer des pattes de clipsage **25.**

Sur la figure 5C, on a représenté une solution avec une ou plusieurs formes en creux **26** ménagées dans la paroi intérieure de l'élément de base ; en vis-à-vis il est prévu des pattes de clipsage **38** sur l'extérieur module adaptateur **3,** les pattes de clipsage venant se loger et formant ancrage dans les formes en creux **26.**

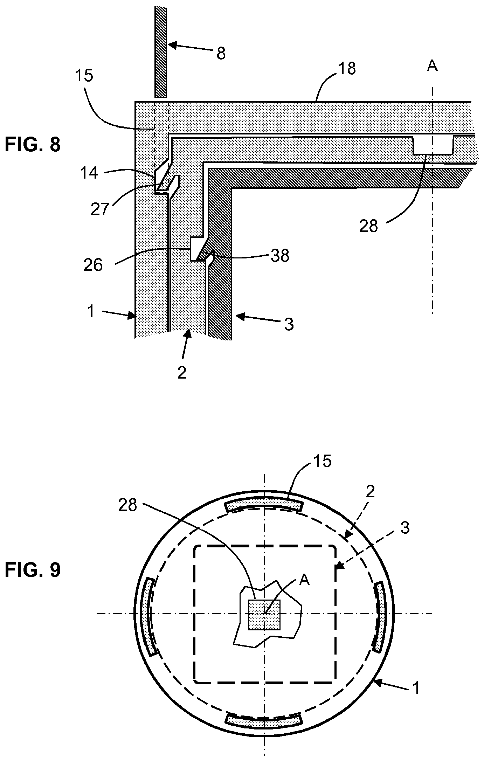

La figure 8 illustre une variante de la configuration présentée à la figure 5C dans laquelle il est prévu de pouvoir déclipser la coque extérieure 1 de manière sélective à l'aide d'un outil spécifique **8.** Selon l'exemple illustré, il est prévu dans la portion discoïde 18 de la coque extérieure des orifices en forme d'arc **15** centrés sur A. Moyennant une rotation ad hoc de la coque extérieure, les orifices en forme d'arc **15** peuvent être amenés à l'endroit de chacune des pattes de clipsage **27** (ici quatre); l'insertion vers le bas d'un outil **8** comprenant quatre formes mâles en forme d'arc correspondant aux quatre orifices en forme d'arc **15** permet de ramener les pattes clipsage vers l'intérieur et de les effacer vis-à-vis de la rainure annulaire **14.** Il est ainsi possible de retirer vers le haut la coque extérieure **1** et de donner accès à une forme de manoeuvre **28** (ici représenté sous forme de carré comme exemple non limitatif) pour pouvoir tourner l'élément de base entraînant ainsi à la fois le module adaptateur et la tête du robinet. On comprend que seul un personnel autorisé muni de l'outil spécifique **8** peut ainsi manoeuvrer la tête de robinet par exemple pour des essais ou une intervention particulière ; à la suite de quoi la coque extérieure **1** peut être installée à nouveau sur l'élément de base **2** pour empêcher à nouveau toute manoeuvre de la tête de robinet.

Dans une variante non représentée aux figures, il peut être prévu un assemblage en force de l'empreinte **36** du module adaptateur sur la tête **6** du robinet.

Selon des alternatives au collage ou à l'assemblage en force, le dispositif de sécurité peut être fixé par clipsage sur le corps du robinet. Ce clipsage peut être réversible ou non réversible. Selon une autre solution alternative, le dispositif de sécurité peut être fixé par clipsage, réversible ou non réversible, sur la canalisation de part et d'autre du robinet.

Il faut remarquer que certaines pièces du montage du dispositif de sécurisation peuvent être fabriquées par une technique d'impression 3D.

S'agissant des dimensions, notamment pour les applications de robinet d'arrêt de conduite de gaz, il faut remarquer que le module adaptateur 3 dans sa forme cubique peut avoir une arête de cube comprise entre 40 mm et 60 mm de préférence voisine de 50 mm. L'élément de base 2 peut présenter un diamètre extérieur du manchon compris entre 70 mm et 80 mm.

La coque extérieure peut présenter un diamètre extérieur compris entre 80 mm et 90 mm, avec une épaisseur de matière (épaisseur de voile) compris entre 2 mm et 3 mm. On remarque qu'une telle solution s'avère très compacte vis-à-vis de la taille des corps 5 de robinet à sécuriser.

## Revendications

1. **Dispositif de sécurité** (10) pour empêcher la manoeuvre d'un robinet d'arrêt (4) sur une canalisation (9) d'axe longitudinal X,
le robinet ayant un **corps** (5) et une **tête** (6), la tête pouvant être pivotée par rapport au corps selon un **axe de manoeuvre A,** le dispositif comprenant :
- une **coque extérieure** (1),
- un **élément de base** (2), reçu dans la coque extérieure, et destiné à être relié à la tête du robinet,
le dispositif de sécurité comprenant des moyens de rétention adaptés pour fixer le dispositif sur le corps et/ou sur la tête du robinet,
la coque extérieure (1) étant reliée à l'élément de base (2) par une liaison à rotation libre autour de l'axe de manoeuvre A, la coque extérieure empêchant ainsi un accès et une manoeuvre de la tête du robinet,
le dispositif de sécurité comprenant en outre un **module adaptateur** (3) reçu dans l'élément de base (2), avec au moins un **logement** (31-36) pour emprisonner la tête (6) du robinet, **caractérisé**
**en ce que** le module adaptateur (3) présente au **moins deux faces opposées** (30A,30B), chacune comportant un logement destiné à recevoir respectivement un type de tête de robinet, et en ce que le module adaptateur est substantiellement de forme cubique et présente 3 à 6 faces utilisables, chacune comportant un logement destiné à recevoir respectivement un type de tête de robinet.

2. Dispositif de sécurité selon la revendication 1, dans lequel l'axe de manoeuvre A est perpendiculaire à l'axe longitudinal X de la canalisation.

3. Dispositif de sécurité selon l'une des revendications 1 à 2, dans lequel l'élément de base comprend une **cavité** (22) configurée pour recevoir le module adaptateur (3), la cavité étant de préférence de forme parallélépipédique propre à recevoir l'insertion du module adaptateur de forme parallélépipédique complémentaire, et ainsi le module adaptateur peut être ainsi inséré dans la cavité de l'élément de base.

4. Dispositif de sécurité selon l'une des revendications 1 à 3, dans lequel ledit **logement** est formé comme une **empreinte complémentaire** de la forme de la tête de robinet à immobiliser.

5. Dispositif de sécurité selon l'une des revendications 1 à 4, dans lequel la coque extérieure enveloppe l'élément de base.

6. Dispositif de sécurité selon l'une des revendications 1 à 5, dans lequel la coque extérieure est formée avec une base discoïde et une jupe cylindrique.

7. Ensemble comprenant un robinet et un dispositif de sécurité selon l'une des revendications 1 à 6, dans lequel le robinet est une vanne 'quart de tour'.

8. Ensemble selon la revendication 7 ou ensemble comprenant un robinet et un dispositif de sécurité selon l'une des revendications 1 à 6, dans lequel le dispositif de sécurité est fixé par collage sur le robinet.

9. Dispositif de sécurité selon la revendication 8, dans lequel le module adaptateur (3) est fixé sur la tête du robinet (6) par collage.

10. Dispositif de sécurité selon l'une des revendications 1 à 6, dans lequel il est prévu une rainure annulaire dans l'une des pièces parmi la coque extérieure ou l'élément de base et une nervure annulaire dans l'autre des pièces parmi la coque extérieure ou l'élément de base, la nervure étant reçue dans la rainure annulaire.

## Patentansprüche

1. **Sicherheitsvorrichtung** (10) zum Verhindern der Betätigung eines Absperrhahns (4) an einer Rohrleitung (9) einer Längsachse X,
wobei der Hahn einen **Körper** (5) und einen **Kopf** (6) besitzt, wobei der Kopf relativ zu dem Körper entlang einer **Betätigungsachse A** schwenkbar ist, die Vorrichtung umfassend:
- eine **Außenschale** (1),
- ein **Basiselement** (2), das in der Außenschale aufgenommen ist und dafür bestimmt ist, mit dem Kopf des Hahns verbunden zu werden,
die Sicherheitsvorrichtung umfassend Haltemittel, die zum Befestigen der Vorrichtung an dem Körper und/oder an dem Kopf des Hahns angepasst sind,
wobei die Außenschale (1) mit dem Basiselement (2) durch eine frei rotierbare Verbindung um die Betätigungsachse A verbunden ist, wobei die Außenschale folglich einen Zugriff und eine Betätigung des Kopfs des Hahns verhindert,
die Sicherheitsvorrichtung ferner umfassend ein **Adaptermodul** (3), das in dem Basiselement (2) aufgenommen ist, mit mindestens einem **Gehäuse** (31-36) zum Einschließen des Kopfes (6) des Hahns, **dadurch gekennzeichnet, dass** das Adaptermodul (3) **mindestens zwei gegenüberliegende Flächen** (30A, 30B) aufweist, die jeweils ein Gehäuse vorweisen, das dafür bestimmt ist, jeweils eine Absperrhahnart aufzunehmen, und dass das Adaptermodul im Wesentlichen würfelförmig ist und 3 bis 6 verwendbare Flächen aufweist, die jeweils ein Gehäuse vorweisen, das dafür bestimmt ist, jeweils eine Absperrhahnart aufzunehmen.

2. Sicherheitsvorrichtung nach Anspruch 1, wobei die Betätigungsachse A senkrecht zu der Längsachse X der Rohrleitung ist.

3. Sicherheitsvorrichtung nach einem der Ansprüche 1 bis 2, wobei das Basiselement einen **Hohlraum** (22) umfasst, der zum Aufnehmen des Adaptermoduls (3) konfiguriert ist, wobei der Hohlraum vorzugsweise quaderförmig ist, geeignet, um die Einfügung des komplementären quaderförmigen Adaptermoduls aufzunehmen, und folglich das Adaptermodul folglich in den Hohlraum des Basiselements einfügbar ist.

4. Sicherheitsvorrichtung nach einem der Ansprüche 1 bis 3, wobei das **Gehäuse** als eine **Vertiefung** ausgebildet ist, die **komplementär** zu der Form des zu blockierenden Kopfs des Hahns ist.

5. Sicherheitsvorrichtung nach einem der Ansprüche 1 bis 4, wobei die Außenschale das Basiselement umhüllt.

6. Sicherheitsvorrichtung nach einem der Ansprüche 1 bis 5, wobei die Außenschale mit einer diskusförmigen Basis und einer zylinderförmigen Schürze ausgebildet ist.

7. Anordnung, umfassend einen Hahn und eine Sicherheitsvorrichtung nach einem der Ansprüche 1 bis 6, wobei der Hahn ein "Vierteldrehungs"-Ventil ist.

8. Anordnung nach Anspruch 7 oder Anordnung, umfassend einen Hahn und eine Sicherheitsvorrichtung nach einem der Ansprüche 1 bis 6, wobei die Sicherheitsvorrichtung durch Kleben an dem Hahn befestigt ist.

9. Sicherheitsvorrichtung nach Anspruch 8, wobei das Adaptermodul (3) durch Kleben an dem Kopf des Hahns (6) befestigt ist.

10. Sicherheitsvorrichtung nach einem der Ansprüche 1 bis 6, wobei in einem der Teile unter der Außenschale oder dem Basiselement eine Ringnut und in dem anderen der Teile unter der Außenschale oder dem Basiselement eine Ringrippe vorgesehen ist, wobei die Rippe in der Ringnut aufgenommen ist.

## Claims

1. **Safety device** (10) for preventing the operation of a stop valve (4) on a pipe (9) having a longitudinal axis X,
the valve having a **body** (5) and a **head** (6), it being possible for the head to be pivoted relative to the body along an **operating axis A,** the device comprising:
- an **outer casing** (1), and
- a **base element** (2) which is received in the outer casing and intended to be connected to the head of the valve,
the safety device comprising retaining means which are suitable for fixing the device to the body and/or to the head of the valve,
the outer casing (1) being connected to the base element (2) by a connection which is freely rotatable about the operating axis A, the outer casing thus preventing access to and operation of the head of the valve,
the safety device further comprising an **adapter module** (3) which is received in the base element (2) and has at least one **housing** (31-36) for locking the head (6) of the valve, **characterized**
**in that** the adapter module (3) has **at least two opposite faces** (30A, 30B), each having a housing which is intended to receive a type of valve head, respectively, and in that the adapter module is substantially cubic and has 3 to 6 usable faces, each having a housing which is intended to receive a type of valve head, respectively.

2. Safety device according to claim 1, wherein the operating axis A is perpendicular to the longitudinal axis X of the pipe.

3. Safety device according to either claim 1 or claim 2, wherein the base element comprises a **cavity** (22) which is configured to receive the adapter module (3), the cavity preferably having a parallelepiped shape which is capable of receiving the insertion of the complementary parallelepiped-shaped adapter module, and thus the adapter module can thus be inserted into the cavity of the base element.

4. Safety device according to any of claims 1 to 3, wherein said **housing** is formed as a **complementary imprint** for the shape of the valve head to be immobilized.

5. Safety device according to any of claims 1 to 4, wherein the outer casing envelops the base element.

6. Safety device according to any of claims 1 to 5, wherein the outer casing is formed having a discoidal base and a cylindrical skirt.

7. Assembly comprising a valve and a safety device according to any of claims 1 to 6, wherein the valve is a quarter turn valve.

8. Assembly according to claim 7 or assembly comprising a valve and a safety device according to any of claims 1 to 6, wherein the safety device is fixed by being glued to the valve.

9. Safety device according to claim 8, wherein the adapter module (3) is fixed to the valve head (6) by gluing.

10. Safety device according to any of claims 1 to 6, wherein an annular groove is provided in one of the parts of the outer casing or the base element and an annular rib is provided in the other of the parts of the outer casing or the base element, the rib being received in the annular groove.
